# FASCICULE DE BREVET EUROPEEN

(11) **EP 3 667 433 B1**
(45) Date de publication et mention de la délivrance du brevet: **01.02.2023**
(21) Numéro de dépôt: 18211865.3
(22) Date de dépôt: 12.12.2018
(51) Int. Cl.: G04B 17/06, G04B 18/02

(54) **SPIRAL ET SON PROCEDE DE FABRICATION**
SPIRALFEDER UND IHR HERSTELLUNGSVERFAHREN
SPRING AND METHOD FOR MANUFACTURING SAME

(43) Date de publication de la demande: 17.06.2020
(73) Titulaire: Nivarox-FAR S.A., 2400 Le Locle (CH)
(72) Inventeur: VERARDO, Marco, 2336 Les Bois (CH); CHARBON, Christian, 2054 Chézard-St-Martin (CH)
(74) Mandataire: ICB SA

(56) Documents cités:
- EP-A1- 2 561 409
- EP-A1- 2 589 568
- EP-A1- 2 590 325
- CH-A2- 711 275

## Description

### DOMAINE TECHNIQUE

La présente invention se rapporte à un spiral destiné à équiper un organe régulateur d'une montre mécanique.

### ART ANTERIEUR

Il existe plusieurs documents décrivant un procédé de dépôt d'un revêtement sur un spiral en silicium thermocompensé avec une couche d'oxyde de silicium. Le premier objectif de ce revêtement est de doter le spiral d'une couche conductrice permettant de libérer les charges électrostatiques et d'éviter le collement des spires entre elles ou contre des éléments du mouvement tels que les ponts et platines. Un second objectif de ce revêtement est de protéger le spiral de l'action néfaste de l'humidité. Pour répondre à ces objectifs, le document EP 1 837 721 divulgue un spiral avec une âme en silicium et une couche épaisse en dioxyde de silicium sur laquelle est effectuée un dépôt métallique ayant une épaisseur inférieure à 50 nm.

Ces procédés sont appliqués avec succès pour la fabrication de spiraux utilisés dans des mouvements équipés de balanciers à inertie réglable. Le spiral de longueur fixe active est généralement collé au piton et le revêtement à la surface du spiral ne subit aucun contact et/ou frottement. Avec la démocratisation du spiral en silicium, l'utilisation se généralise à des mouvements plus simples à balanciers annulaires sans réglage d'inertie. Un spiral est associé à un balancier puis la fréquence de l'oscillateur est ajustée par le réglage de la longueur active du spiral au moyen d'une raquetterie. Le spiral est généralement guidé entre deux goupilles et vient buter contre l'une puis contre l'autre à chaque alternance du balancier. Le contact et le mouvement entre la surface du spiral et les goupilles peut mener à une usure prématurée de la couche conductrice et résistante à l'humidité.

Les documents EP 2 590 325 A1 et CH 711 275 A2 divulguent des spiraux revêtus avec une couche conductrice.

### RESUME DE L'INVENTION

Pour pallier aux inconvénients précités, la présente invention a pour but de proposer un spiral présentant une résistance à l'usure améliorée dans la zone de contact de la spire extérieure avec les goupilles de raquette.

L'invention a également pour but de fournir un tel spiral qui résiste à l'humidité tout en présentant également des propriétés antistatiques.

A cet effet, l'invention concerne un spiral destiné à équiper un balancier à inertie fixe d'une pièce d'horlogerie, le spiral étant formé d'une âme comprenant des faces latérales reliant une face supérieure à une face inférieure, ledit spiral comportant au moins sur une portion de sa spire extérieure et sur au moins une des faces latérales dans ladite portion de la spire extérieure, un revêtement formé d'une ou plusieurs couches, ledit revêtement étant caractérisé en ce qu'il comporte :
- une couche, dite combinée, réalisée dans une céramique électriquement conductrice combinant les fonctions antistatique, de barrière contre l'humidité et anti-usure.

Selon une variante qui ne fait pas partie de l'objet des revendications annexées, ledit revêtement comporte :
- deux couches avec une première couche électriquement conductrice ayant une fonction antistatique et de barrière contre l'humidité, revêtue avec une seconde couche extérieure réalisée dans une céramique ayant une fonction anti-usure.

Ainsi le spiral comprend sur sa spire extérieure au moins dans la zone de contact avec les goupilles de raquette une couche céramique qui garantit la durabilité du matériau sous-jacent au niveau de la zone de contact et donc globalement une meilleure résistance à l'usure du spiral.

Selon une variante qui ne fait pas partie de l'objet des revendications annexées, le matériau sous-jacent est le matériau constitutif de la première couche électriquement conductrice qui est soit déposée directement sur l'âme du spiral, soit déposée sur une couche intermédiaire telle qu'une couche de compensation thermique.

Selon l'autre variante où la couche céramique résistante à l'usure est également conductrice, le matériau sous-jacent est le matériau de l'âme du spiral ou le matériau de la couche intermédiaire de compensation thermique.

Le procédé de fabrication du spiral consiste à déposer ladite couche céramique sur au moins une des faces latérales du spiral destinées en utilisation à être en contact avec les goupilles. Cette couche a une épaisseur comprise entre 5 et 100 nm, et, de préférence, entre 20 et 50 nm. Préférentiellement, elle s'étend sur une portion de la spire extérieure sur un arc de cercle compris entre 10 et 60°, et, plus préférentiellement, entre 30 et 40°.

Selon des modes particuliers de l'invention, le spiral présente en outre une ou une combinaison appropriée des caractéristiques suivantes :
- la couche dite combinée est réalisée dans une céramique à base d'oxydes éventuellement dopés ou à base de borures ;
- la couche dite combinée est réalisée dans un dioxyde d'étain dopé au fluor, dans un oxyde d'indium et d'étain, dans un oxyde de zinc éventuellement dopé à l'aluminium ou dans un borure de titane ;
- chacune des faces latérales comporte dans ladite portion de la spire extérieure la couche dite combinée ;
- chacune des faces latérales comporte dans ladite portion de la spire extérieure la couche de compensation thermique sous-jacente à la couche dite combinée.

La présente invention se rapporte également à un spiral destiné à équiper un balancier à inertie fixe d'une pièce d'horlogerie, ledit spiral étant formé d'une âme en silicium comprenant des faces latérales reliant une face supérieure à une face inférieure, ledit spiral étant revêtu sur au moins une des faces latérales dans une portion de sa spire extérieure d'une couche en céramique à l'exception d'un oxyde de silicium, ladite couche étant directement déposée sur l'âme en silicium et ayant une épaisseur comprise entre 5 et 100 nm et, de préférence, entre 20 et 50 nm, ledit spiral comportant en dehors de ladite portion sur tout ou partie des faces latérales, inférieure ou supérieure une couche d'oxyde de silicium permettant de compenser les variations du coefficient thermoélastique de l'âme avec la température, revêtue avec une couche métallique.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

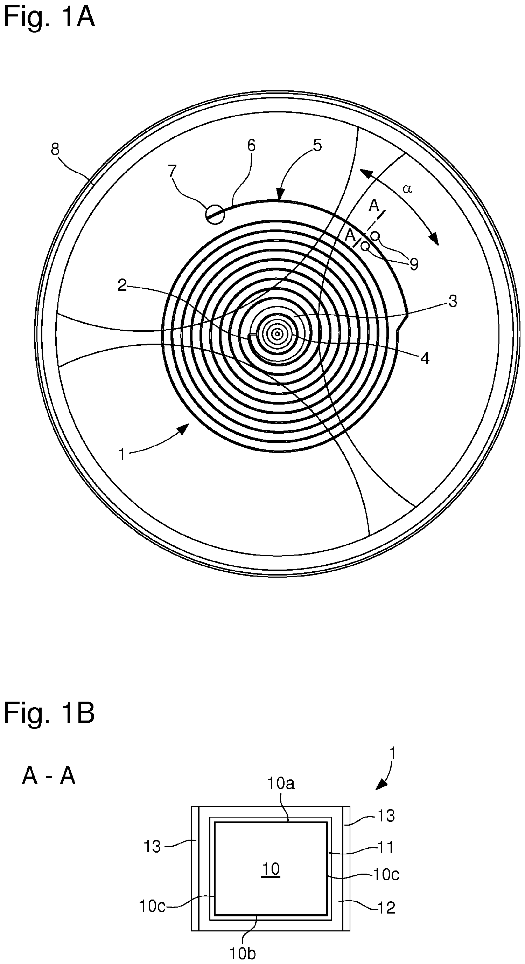

La figure 1A est une vue de dessus d'un spiral selon l'invention monté sur son balancier. La figure 1B est une section transversale selon l'axe A-A de la spire extérieure du spiral de la figure 1A.

### DESCRIPTION DETAILLEE

La présente invention se rapporte à un spiral destiné plus spécifiquement à équiper un balancier à inertie fixe. De manière connue, comme représenté à la figure 1A, le spiral 1 comporte une extrémité intérieure 2 par laquelle il est fixé à une virole 3 ajustée sur un axe 4 du balancier 8. Notamment dans le cas d'un spiral réalisé à base de silicium, de quartz ou de céramique, la virole vient de matière avec le spiral. Le spiral 1 comprend une spire extérieure 5 qui se termine par une extrémité 6 attachée à un piton 7. Le piton est solidaire d'un pont de balancier (non représenté) fixé à la platine du mouvement. Avant le point de fixation au piton, la spire extérieure passe entre les goupilles 9 de la raquette. Dans cette zone particulière, qu'on qualifiera de zone de contact, les deux faces latérales du spiral viennent respectivement buter contre une goupille puis contre l'autre goupille à chaque alternance du balancier. Dans certaines configurations de l'ensemble balancier-spiral, il est également possible que seule une des faces latérales soit amenée à buter contre une des goupilles. Dès lors, selon l'invention, au moins la ou les faces latérales du spiral dans cette zone de contact sont recouvertes avec une couche d'un matériau dur en céramique qui protège de l'usure le matériau sous-jacent lors du contact entre le spiral et la goupille.

La couche céramique est réalisée de préférence dans un carbure tel que, par exemple, le SiC. Elle peut également être réalisée dans un nitrure tel que, par exemple, le Si₃N₄, dans un oxyde tel que, par exemple, le ZrO₂ Al₂O₃, TiO₂ ou encore dans un borure tel que le TiB₂. Cette couche a une épaisseur comprise entre 5 et 100 nm et, de préférence, entre 20 et 50 nm.

Selon une variante qui ne fait pas partie de l'objet de revendications annexées, le matériau sous-jacent est un matériau constitutif d'une couche ayant une fonction antistatique et agissant comme une barrière contre l'humidité. Cette couche est métallique et formée d'un métal inoxydable et amagnétique tel que l'or, le platine, le rhodium, le palladium, le tantale, le chrome, le vanadium, etc. Typiquement, cette couche a une épaisseur inférieure ou égale à 100 nm.

Selon une autre variante, la couche céramique résistante à l'usure est également électriquement conductrice et résistante à l'humidité. Auquel cas, la couche précitée ayant une fonction antistatique et agissant comme une barrière contre l'humidité n'est plus requise. Dans cette variante, la couche céramique conductrice peut être réalisée dans un oxyde tel que le SnO₂:F qui est du dioxyde d'étain dopé au fluor, dans un oxyde d'indium-étain (ITO : Indium tin oxide), du ZnO qui est un oxyde de zinc parfois dopé à l'aluminium (ZnO:Al), etc. Il peut également s'agir d'un borure tel que le TiB₂ qui est conducteur.

Préférentiellement, cette couche ayant une fonction antistatique et de barrière contre l'humidité, qu'il s'agisse de la couche métallique précitée ou de la couche céramique conductrice précitée, recouvre elle-même une couche, dite de compensation thermique, qui a pour fonction de compenser les variations du coefficient thermoélastique de l'âme avec la température. Par exemple, cette couche de compensation thermique est formée d'oxyde de silicium (SiO₂). Son épaisseur est adaptée pour prendre en compte l'effet des couches conductrices et résistantes à l'usure sur le comportement thermique du spiral.

Le spiral 1 représenté en détail à la figure 1B pour la variante préférée comporte ainsi une âme 10 réalisée en silicium, en quartz ou dans une céramique de manière générale. Cette âme a typiquement une forme en quadrilatère avec une face supérieure 10a reliée à une face inférieure 10b par deux faces latérales 10c. Cette âme 10 est préférentiellement en tout ou partie recouverte de la couche 11 de compensation thermique. Dans le cas d'une âme en silicium, une ou plusieurs des faces de l'âme est ainsi recouverte d'une couche 11 formée de SiO₂. L'âme est ensuite recouverte sur une ou plusieurs de ses faces avec la couche métallique 12 ayant une fonction antistatique et de barrière contre l'humidité. Ensuite, au moins une ou les deux faces latérales 10c de l'âme 10 préalablement revêtues des couches 11 et 12 est recouverte avec la couche dure 13 en céramique dans la zone où il y a un contact en utilisation avec la ou les goupilles. La présente invention n'exclut pas que la couche dure s'étende au-delà de la zone de contact. Ainsi, la couche dure s'étend sur au moins une portion de la spire extérieure 5 à proximité de son extrémité. Avantageusement, la portion s'étend sur un arc de cercle α compris entre 10 et 60°, et, de préférence, entre 30 et 40° (figure 1A). Ladite portion s'étend sur un arc de cercle suffisant pour s'assurer que, pour tout agencement des goupilles au sein de l'ensemble spiral-balancier, le ou les faces latérales destinées à être dans la zone de contact soient bien recouvertes avec la couche dure.

Le spiral est réalisé avec le procédé de fabrication comprenant les étapes successives suivantes décrites, à titre d'exemple, pour un spiral en silicium. Le spiral avec son âme en silicium peut être obtenu partant d'une plaquette en silicium (procédé wafer). De manière connue, on peut, par exemple, effectuer une attaque chimique par voie humide, un usinage à sec par plasma ou une gravure ionique réactive (RIE) en utilisant des masques appropriés au contour souhaité pour le spiral. La couche de compensation thermique en dioxyde de silicium est obtenue par oxydation thermique d'une ou plusieurs des faces de l'âme. Ensuite, lorsque la couche céramique anti-usure est non conductrice, la couche métallique est déposée sur une ou plusieurs des faces de l'âme. La couche conductrice est déposée au moyen de divers procédés connus, tels que la pulvérisation *(sputtering)*, le dépôt PVD (*Physical Vapor Deposition*), l'implantation ionique ou le dépôt électrolytique. Finalement, la couche céramique selon l'invention est déposée par PVD, CVD (*Chemical Vapor Deposition*), ALD (*Atomic Layer Deposition*), etc. sur la ou les faces latérales de la portion de la spire extérieure. On notera que la présente invention n'exclut pas que la couche céramique soit également déposée sur les faces supérieure et inférieure sur cette portion.

Par ailleurs, la présente invention n'exclut pas que la couche céramique conductrice ou non soit déposée directement sur une ou les deux faces latérales de l'âme en silicium dans la zone de contact. Ladite âme est alors dépourvue de la couche de compensation thermique en SiO₂ ainsi que de la couche métallique dans la zone de contact mais pourvue de ces dernières sur tout ou partie de l'âme en dehors de cette zone. La couche dure est ainsi une couche céramique à base de nitrure, de carbure ou d'oxyde à l'exception dans ce dernier cas du SiO₂, destinée à protéger de l'usure l'âme en silicium dans la zone de contact.

### Légende

- (1): Spiral
- (2): Extrémité intérieure
- (3): Virole
- (4): Axe
- (5): Spire extérieure
- (6): Extrémité extérieure
- (7): Piton
- (8): Balancier
- (9): Goupille
- (10): Ame
a. Face supérieure
b. Face inférieure
c. Face latérale
- (11): Couche sous-jacente, aussi appelée couche de compensation thermique
- (12): Première couche, aussi appelée couche métallique
- (13): Seconde couche, aussi appelée couche céramique, ou couche combinée

## Revendications

1. Spiral (1) pouvant équiper un oscillateur balancier spiral avec balancier à inertie fixe d'une pièce d'horlogerie, le spiral (1) étant formé d'une âme (10) comprenant des faces latérales (10c) reliant une face supérieure (10a) à une face inférieure (10b), ledit spiral (1) comportant au moins sur une des faces latérales (10c) dans une portion de la spire extérieure (5) un revêtement formé d'une ou plusieurs couches, ledit revêtement étant **caractérisé en ce qu'**il comporte :
- une couche (13) agencée pour entrer en contact avec au moins une goupille que ledit oscillateur balancier spiral comporte, ladite couche, dite combinée, étant réalisée dans une céramique électriquement conductrice.

2. Spiral (1) selon la revendication 1, **caractérisé en ce que** la couche (13) dite combinée est réalisée dans une céramique à base d'oxydes éventuellement dopés ou à base de borures.

3. Spiral (1) selon la revendication 2, **caractérisé en ce que** la couche (13) dite combinée est réalisée dans un dioxyde d'étain dopé au fluor, dans un oxyde d'indium et d'étain, dans un oxyde de zinc éventuellement dopé à l'aluminium ou dans un borure de titane.

4. Spiral (1) selon l'une quelconque des revendications précédentes, **caractérisé en ce que** ladite portion s'étend sur la spire extérieure (5) sur un arc de cercle compris entre 10 et 60°, et, de préférence, entre 30 et 40°.

5. Spiral (1) selon l'une quelconque des revendications précédentes, **caractérisé en ce que** la couche (13) dite combinée a une épaisseur comprise entre 5 et 100 nm et, de préférence, entre 20 et 50 nm.

6. Spiral (1) selon l'une quelconque des revendications précédentes, **caractérisé en ce que** le revêtement comporte en outre une couche (11) sous-jacente à la couche (13) dite combinée, cette couche (11) sous-jacente permettant de compenser les variations du coefficient thermoélastique de l'âme (10) avec la température.

7. Spiral (1) selon la revendication 6, **caractérisé en ce que** l'âme (10) est en silicium et ladite couche (11) sous-jacente est en dioxyde de silicium.

8. Spiral (1) selon l'une quelconque des revendications précédentes, **caractérisé en ce que** chacune des faces latérales (10c) comporte dans ladite portion de la spire extérieure (5) la couche (13) dite combinée.

9. Spiral (1) selon la revendication 8, **caractérisé en ce que** chacune des faces latérales (10c) comporte dans ladite portion de la spire extérieure (5) une couche (11) sous-jacente à la couche (13) dite combinée.

10. Spiral (1) pouvant équiper un oscillateur balancier spiral avec balancier à inertie fixe d'une pièce d'horlogerie, ledit spiral (1) étant formé d'une âme (10) en silicium comprenant des faces latérales (10c) reliant une face supérieure (10a) à une face inférieure (10b), ledit spiral (1) étant revêtu sur au moins une des faces latérales (10c) dans une portion de sa spire extérieure (5) d'une couche (13) en céramique à l'exception d'un oxyde de silicium, ladite couche (13) étant directement déposée sur l'âme (10) en silicium et ayant une épaisseur comprise entre 5 et 100 nm et, de préférence, entre 20 et 50 nm, ledit spiral (1) comportant en dehors de ladite portion sur tout ou partie des faces latérales (10c), inférieure (10b) ou supérieure (10a) une couche (11) d'oxyde de silicium permettant de compenser les variations du coefficient thermoélastique de l'âme (10) avec la température, revêtue avec une couche métallique (12).

11. Spiral selon la revendication 10, **caractérisé en ce que** la couche (13) qui revêt au moins une des faces latérales (10c) dans la portion de spire extérieure (5) est une céramique à base de nitrure, de carbure, de borures ou d'oxydes.

12. Pièce d'horlogerie comprenant un balancier à inertie fixe et une raquetterie comprenant deux goupilles de raquette (9), **caractérisée en ce qu'**elle comporte le spiral (1) selon l'une quelconque des revendications précédentes avec ladite portion disposée en regard desdites deux goupilles (9).

## Patentansprüche

1. Spiralfeder (1) für einen Unruh-Spiralfeder-Oszillator einer Uhr mit festem Trägheitsmoment, wobei die Spiralfeder (1) aus einem Kern (10) gebildet ist, der Seitenflächen (10c) aufweist, die eine obere Fläche (10a) mit einer unteren Fläche (10b) verbinden, wobei die Spiralfeder (1) in einem Abschnitt der äußeren Windung (5) mindestens auf einer der Seitenflächen (10c) eine Beschichtung aufweist, die aus einer oder mehreren Schichten gebildet ist, wobei die Beschichtung **dadurch gekennzeichnet ist, dass** sie Folgendes umfasst:
- eine Schicht (13), die dafür ausgelegt ist, mit mindestens einem Sperrstift, den der Unruh-Spiralfeder-Oszillator aufweist, in Kontakt zu kommen, wobei die sogenannte vereinigende Schicht aus einer elektrisch leitfähigen Keramik hergestellt ist.

2. Spiralfeder (1) nach Anspruch 1, **dadurch gekennzeichnet, dass** die sogenannte vereinende Schicht (13) aus einer Keramik auf der Basis von Oxiden, die eventuell dotiert sind, oder auf der Basis von Bonden hergestellt ist.

3. Spiralfeder (1) nach Anspruch 2, **dadurch gekennzeichnet, dass** die sogenannte vereinende Schicht (13) aus einem mit Fluor dotierten Zinndioxid, aus einem Indium-Zinn-Oxid, aus einem eventuell mit Aluminium dotierten Zinkoxid oder aus einem Titanborid hergestellt ist.

4. Spiralfeder (1) nach einem der vorhergehenden Ansprüche, **dadurch gekennzeichnet, dass** der Abschnitt sich auf der äußeren Windung (5) über einen Kreisbogen im Bereich von 10 bis 60°, vorzugsweise von 30 bis 40°, erstreckt.

5. Spiralfeder (1) nach einem der vorhergehenden Ansprüche, **dadurch gekennzeichnet, dass** die sogenannte vereinende Schicht (13) eine Dicke im Bereich zwischen 5 bis 100 nm und vorzugsweise zwischen 20 und 50 nm hat.

6. Spiralfeder (1) nach einem der vorhergehenden Ansprüche, **dadurch gekennzeichnet, dass** die Beschichtung außerdem eine unter der sogenannten verbindenden Schicht (13) liegende Schicht (11) besitzt, die ermöglicht, Änderungen des thermoelastischen Koeffizienten des Kerns (10) in Abhängigkeit der Temperatur zu kompensieren.

7. Spiralfeder (1) nach Anspruch 6, **dadurch gekennzeichnet, dass** der Kern (10) aus Silizium ist und die darunterliegende Schicht (11) aus Siliziumdioxid ist.

8. Spiralfeder (1) nach einem der vorhergehenden Ansprüche, **dadurch gekennzeichnet, dass** jede der Seitenflächen (10c) in dem Abschnitt der äußeren Windung (5) die sogenannte verbindende Schicht (13) aufweist.

9. Spiralfeder (1) nach Anspruch 8, **dadurch gekennzeichnet, dass** jede der Seitenflächen (10c) in dem Abschnitt der äußeren Windung (5) eine unter der sogenannten vereinenden Schicht (13) liegende Schicht (11) besitzt.

10. Spiralfeder (1) für einen Unruh-Spiralfeder-Oszillator einer Uhr mit festem Trägheitsmoment, wobei die Spiralfeder (1) aus einem Siliziumkern (10) aus gebildet ist, der Seitenflächen (10c) aufweist, die eine obere Fläche (10a) mit einer unteren Fläche (10b) verbinden, wobei die Spiralfeder (1) in einem Abschnitt ihrer äußeren Windung (5) auf mindestens einer der Seitenflächen (10c) mit einer Schicht aus Keramik mit Ausnahme von Siliziumdioxid bedeckt ist, wobei die Schicht (13) direkt auf dem Siliziumkern (10) abgelagert ist und eine Dicke zwischen 5 und 100 nm und vorzugsweise zwischen 20 und 50 nm aufweist, wobei die Spiralfeder (1) außerhalb des Abschnitts auf allen Seitenflächen (10c), auf der unteren Fläche (10b) und auf der oberen Fläche (10a) oder auf einem Teil hiervon eine Schicht (11) aus Siliziumdioxid aufweist, die ermöglicht, die Änderungen des thermoelastischen Koeffizienten des Kerns (10) in Abhängigkeit von der Temperatur auszugleichen, und mit einer Metallschicht (12) bedeckt ist.

11. Spiralfeder nach Anspruch 10, **dadurch gekennzeichnet, dass** die Schicht (13), mit der in dem Abschnitt der äußeren Windung (5) mindestens eine der Seitenflächen (10c) bedeckt ist, eine Keramik auf der Basis von Nitrid, Carbid, Boriden oder Oxiden ist.

12. Uhr mit einer Unruh mit festem Trägheitsmoment und einer Reguliereinrichtung mit zwei Reguliersperrstiften (9), **dadurch gekennzeichnet, dass** die Spiralfeder (1) nach einem der vorhergehenden Ansprüche enthalten ist, wobei der Abschnitt gegenüber den beiden Sperrstiften (9) angeordnet ist.

## Claims

1. Balance spring (1) intended to be fitted to a balance spiral oscillator with a timepiece balance having fixed inertia, the balance spring (1) being formed of a core (10) having lateral faces (10c) connecting an upper face (10a) to a lower face (10b), said balance spring (1) comprising at least on one of the lateral faces (10c) in one portion of the outer coil (5), a coating formed of one or more layers, said coating being **characterised in that** it includes:
- a layer (13) arranged to contact at least one pin that said balance spiral oscillator comprises, said combined layer being made of an electrically conductive ceramic.

2. Balance spring (1) according to claim 1, **characterised in that** the combined layer (13) is made of a ceramic based on possibly doped oxides or based on borides.

3. Balance spring (1) according to claim 2, **characterised in that** the combined layer (13) is made of a fluoride-doped tin dioxide, an indium and tin oxide, a zinc oxide possibly doped with aluminium, or a titanium boride.

4. Balance spring (1) according to any of the preceding claims, **characterised in that** said portion extends over the outer coil (5) on an arc of a circle comprised between 10 and 60°, and preferably between 30 and 40°.

5. Balance spring (1) according to any of the preceding claims, **characterised in that** the combined layer (13) has a thickness comprised between 5 and 100 nm and preferably between 20 and 50 nm.

6. Balance spring (1) according to any of the preceding claims, **characterised in that** the coating further includes a layer (11) underlying the combined layer (13), this underlying layer (11) compensating for variations in the thermoelastic coefficient of the core (10) with temperature.

7. Balance spring (1) according to claim 6, **characterised in that** the core (10) is made of silicon and said underlying layer (11) is made of silicon dioxide.

8. Balance spring (1) according to any of the preceding claims, **characterised in that** each of the lateral faces (10c) includes in said portion of the outer coil (5) the combined layer (13).

9. Balance spring (1) according to claim 8, **characterised in that** each of the lateral faces (10c) includes in said portion of the outer coil (5), a layer (11) underlying the combined layer (13).

10. Balance spring (1) intended to be fitted to a balance spiral oscillator with a timepiece balance having fixed inertia, said balance spring (1) being formed of a silicon core (10) having lateral faces (10c) connecting an upper face (10a) to a lower face (10b), said balance spring (1) being coated on at least one of the lateral faces (10c) in a portion of its outer coil (5) with a ceramic layer (13) with the exception of a silicon oxide, said layer (13) being directly deposited on the silicon core (10) and having a thickness comprised between 5 and 100 nm and, preferably, between 20 and 50 nm, said balance spring (1) comprising, apart from said portion, on all or part of the lateral (10c), lower (10b) or upper (10a) faces, a silicon oxide layer (11) in order to compensate for variations in the thermoelastic coefficient of the core (10) with temperature, coated with a metal layer (12).

11. Balance spring (1) according to claim 10, **characterised in that** the layer (13) that coats at least one of the lateral faces (10c) in the portion of outer coil (5) is a nitride-based, carbide-based, boride-based or oxide-based ceram ic.

12. Timepiece comprising a balance having fixed inertia and an index assembly comprising two index pins (9), **characterised in that** the timepiece includes the balance spring (1) according to any of the preceding claims with said portion disposed facing said two pins (9).
